# EUROPEAN PATENT SPECIFICATION

(11) **EP 3 326 856 B1**
(45) Date of publication and mention of the grant of the patent: **20.03.2019**
(21) Application number: 16200213.3
(22) Date of filing: 23.11.2016
(51) Int. Cl.: B60L 9/30

(54) **AN ELECTRIC MULTISYSTEM FOR A RAIL VEHICLE**
ELEKTRISCHES MULTISYSTEM FÜR EIN SCHIENENFAHRZEUG
MULTISYSTÈME ÉLECTRIQUE POUR VÉHICULE FERROVIAIRE

(43) Date of publication of application: 30.05.2018
(73) Proprietor: Bombardier Transportation GmbH, 10785 Berlin (DE)
(72) Inventor: Steinbrecher, Kjell, SE-722 31 VÄSTERÅS (SE)
(74) Representative: Bjerkéns Patentbyrå KB (Gävle)

(56) References cited:
- WO-A1-97/47492
- DE-A1- 4 321 988
- DE-A1-102004 004 579
- DE-A1-102008 014 571

## Description

### TECHNICAL FIELD OF THE INVENTION AND BACKGROUND ART

The present invention relates to an electric multisystem configured to be arranged on board a rail vehicle and comprising
- a first connector means configured to one at a time connect either a first connection point of the electric system to an AC-contact line or a second connection point of the electric system to a DC-contact line,
- a transformer comprising a primary winding to which the first connection point is connected,
- a line converter to which a secondary winding of the transformer is connected and which has at least one bridge with two phase-legs connected in parallel between opposite poles of a DC intermediate link and having each at least two current valves connected in series, each said current valve comprising a semiconductor device of turn-off type and a rectifying member connected in anti-parallel therewith, a midpoint of each phase-leg dividing the phase-leg in two identical halves being connected to said secondary winding of the transformer, and
- a control unit configured to control the current valves of the line converter by controlling said semiconductor devices thereof.

Such electric multisystems are of interest on board rail vehicles which may be driven both on rail sections energized by an AC-contact line and those energized by DC. When passing from one of these types of rail sections to the other type said connector means will take care of a change of the electric system to be fed with another type of electric power, AC or DC, than before while allowing electric motors for driving the vehicle and other electric equipment of the vehicle to operate as before.

The invention is not restricted to such electric multisystems for any special type of rail vehicles, but the rail vehicle may be of any conceivable type. The invention is neither restricted to any particular levels of the voltage of the AC-contact line or the DC-contact line through which the system is fed. "DC-contact line" will in this disclosure refer to both the possibility of a third rail contact line (as in UK) and that of a DC overhead contact line, such as for instance for a "tram-train".

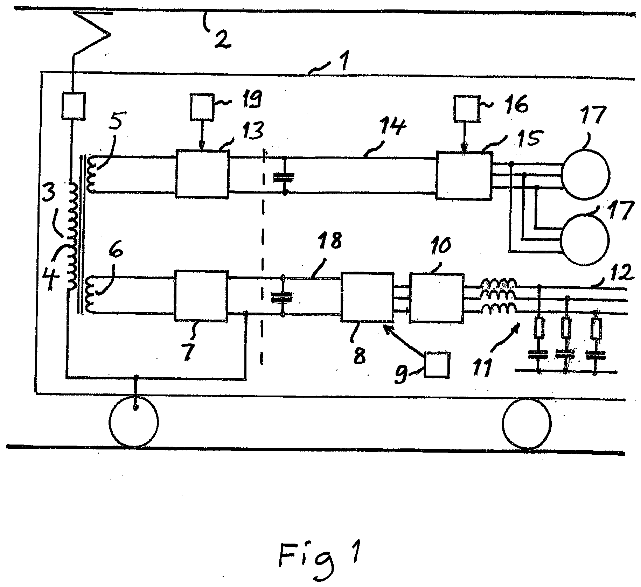

Fig. 1 illustrates schematically a possible design of an electric system of the type defined in the introduction without having a possible connection thereof to a DC-contact line shown, and the construction of this known system will now be described for facilitating the understanding of the present invention. It is shown how electric power is fed to a rail vehicle 1 from an AC-contact line 2 and used in the vehicle. The vehicle is configured to move along the AC-contact line 2, which may for example carry a single phase alternating voltage of 15 kV and 16 2/3 Hz (Sweden) or 25 kV and 50 Hz (Denmark). The vehicle has a transformer 3 for transforming the voltage from the contact line 2 to a suitable level. The transformer has here a primary winding 4 and two secondary windings 5, 6 one of which being connected to a line converter 7 for delivering a direct voltage of for example 1.5-3 kV, such as 1.65 kV, on the output thereof. This direct voltage of the DC intermediate link 18 is delivered to an auxiliary converter 8, which is controlled by a control unit 9 for generating a train of pulses according to a Pulse Width Modulation pattern for delivering a three-phase alternating voltage on the output thereof. The output of the auxiliary converter 8 is connected to a three-phase transformer 10 as well as harmonic filters 11 for smoothing out the alternating voltage delivered by a distribution network 12 to sockets arranged in the rail vehicle, such as for connection of computers, and to lightening, heating, and other appliances.

The other secondary winding 5 of the transformer is connected to a line converter 13 configured to deliver direct voltage on the output thereof to a DC intermediate link 14 forming the input to a motor converter 15 controlled by a control unit 16 in a similar way as the control carried out by the control unit 9 for delivering a three-phase alternating voltage on the output of the motor converter to motors 17 in the form of electric machines, for driving the vehicle.

The electric system shown in Fig.1 is an AC-system, and there are different options for modifying it to be a multisystem also allowing feeding of electric power thereto in the form of such power provided by a DC-contact line. One such option is to design a said connector means to connect a DC-contact line via a line filter inductor to the DC intermediate link 14 for feeding electric power to the electric motors driving the vehicle and make a corresponding connection of the DC-contact line to the DC intermediate link 18 connected to the auxiliary converter 8. The respective line converter 13, 7 will then be inactive. This will result in a DC link voltage supplied to the respective motor and auxiliary converter varying over a wide range, such as for instance between 500 V and 1 000 V for a DC-contact line with a nominal voltage of 750 V and between 1 000 V and 1 950 V for a DC-contact line with a nominal voltage of 1 500 V. This is because the magnitude of the DC voltage delivered to the electric system of the vehicle will depend upon the present location of the vehicle along the contact line and if other rail vehicles are operating on the same rail section as the rail vehicle or not.

Another option is to feed the DC link 14, 18 via a dedicated DC to DC chopper using a dedicated chopper inductor when supplied from a DC contact line. This is known through EP 2 695 763 A2, in which the secondary winding of the transformer is then used as a line filter inductor.

A further option is disclosed in the pamphlet "High speed dual voltage locomotive" of Ingeteam Traction from 09/2008. In this system a DC line voltage may be connected to one end of the secondary windings, with the other ends still connected to a phase of the line converter. The secondary windings then act as line filter inductors, with the line current reaching the DC intermediate link via the diode in the upper part of the line converter phase leg. If the line converter to which the secondary winding is connected is switched it may operate as a DC - DC chopper for obtaining a reduction of the range of possible levels of the voltage delivered to said DC intermediate link, but as there is no separate line filter capacitor and no separate chopper inductor, this will be at the expense of a chopper frequency line current harmonic. Also, as the DC-contact line is connected to one end of the secondary winding of the transformer only one of the phase-legs of each bridge in the line converter may be used, since control of the other phase-leg would result in a short circuit between the DC voltage and earth. This results in not only a low level of electric power transferrable through the line converter but also a high content of harmonics due to the low switching frequency possible.

### SUMMARY OF THE INVENTION

The object of the present invention is to provide an electric multisystem of the type discusses above being improved in at least some aspect with respect to such systems already known.

This object is according to the invention obtained by providing such an electric multisystem with the features listed in the characterizing part of appended patent claim 1.

By dividing the secondary winding of the transformer into two halves connected in series and designing the second connector means to connect the DC voltage to the secondary winding by connecting it to a midpoint of the secondary winding of the transformer between these two halves, the line converter may be controlled to, together with the inductance of each half of the secondary winding used as a step-up chopper inductor, act as a DC to DC-chopper for adjusting the level of the DC voltage delivered to the DC intermediate link. This design enables using both phase-legs of the line converter resulting in a transferrable electric power being twice the electric power transferrable would the DC voltage be connected to one end of the secondary winding, and the ripple frequency in the line current will then also be twice as high resulting in a lower content of harmonics. By the use of the line converter together with the secondary winding inductance as a DC to DC-chopper the voltage delivered on the DC intermediate link may be adjusted by appropriate control of the line converter, so that the design and dimensioning of the rest of the electric system may be optimized for a narrow DC link voltage range, despite that the DC line voltage supplied to the vehicle varies in a much wider range, e. g. 500 - 1000 V DC or 1000 V - 1950 V DC. A system for nominal line voltages of 750 V DC and 25 kV or 15 kV AC may for example in both AC and DC mode have the line converter regulating the DC intermediate link to a voltage above the maximum value achieved without switching the semiconductor switch of the DC to DC chopper, e. g. 1 800 V DC. A very similar system may also be used for the same AC line voltage, but for a DC line voltage with a range reaching above the regulated DC intermediate link value, e. g. when the regulated DC link voltage is 1 800 V DC it may be used for DC lines with a nominal line voltage of 1 500 V DC, i. e. with the range 1 000 - 1 950 V. In this latter case the line converter operating as DC to DC chopper will be able to increase and regulate any line voltage below the desired DC link voltage level, e. g. 1 800 V, but when the line voltage exceeds this level this higher voltage will inevitably reach the DC link via the rectifying members of the upper valves in the phase legs and the DC link voltage is no longer regulated. In both cases, however, the narrower DC link voltage range means that most components of the system can be shared with an electric system built only for AC line voltage supply, thereby reducing design, material and production cost. It is even possible to design a multisystem which can operate on two different DC line voltages and at least one AC line voltage, such as 750 V DC tram lines and 1500 V DC and 25 kV AC main lines in France or 1500 V DC and 25 kV AC lines in France and 3 kV DC and 25 kV AC lines in Italy, and for each of these contact line voltages will have a DC intermediate link voltage keeping within a narrow range, so that most part of the system may be optimized for this narrow DC link voltage range.

According to an embodiment of the invention the electric multisystem comprises means configured to determine the level of the voltage on the DC intermediate link when the second connector means connects the midpoint of the secondary winding of the transformer to the second connection point, and it comprises means configured to compare the level of this DC intermediate link voltage with a predetermined level, and the control unit is configured to control the line converter to deliver a DC voltage on the DC intermediate link of a level approaching said predetermined level. "Approaching" is here used for stating that it is not necessary that the line converter is controlled so that the level of the DC voltage delivered to the DC intermediate link is exactly the same as said predetermined level, but it may for different reasons be chosen to for instance increase the level from 500 - 1 000 V to 1 650 - 1800 V although the predetermined level is 1 800 V.

According to another embodiment of the invention the control unit is configured to control the current valves of the at least two phase-legs of the line converter with the aim to cancel out harmonics. This aim will be addressed by interleaving the PWM patterns in all chopper phases. Interleaving means that the different pulses in different phases connected to the same supply are synchronised and distributed uniformly in time so that the total line (or load) current has a current ripple as if the switching frequency were higher than the actual frequency of each phases. According to another embodiment of the invention said line converter has two said bridges connected in parallel to said DC intermediate link, and the transformer comprises two said secondary windings each divided into two halves and connected to a said bridge each of the line converter.

According to another embodiment of the invention the electric system comprises a motor converter connected to the DC intermediate link and controlled by a control unit for delivering a three-phase alternating voltage on the output thereof to one or several motors in the form of electric machines for driving the vehicle. The design of the electric multisystem according to the invention will ensure that the motor converter will always get a DC voltage suitable for providing the electric motors with a desired alternating voltage.

According to another embodiment of the invention the electric multisystem has two line converters connected to a said DC intermediate link each, and one of the DC intermediate links may then be connected to an auxiliary converter connected through a further transformer to sockets of a distribution network in the rail vehicle, such as for connection of computers, and to lightning, heating, and other appliances as shown in Fig. 1. However, it is also possible to have the two line converters connected in parallel to the same DC intermediate link.

The invention also relates to a method for controlling an electric multisystem on board a rail vehicle according to the appended independent method claim. The advantages of such a method and the embodiment thereof defined in the dependent method claim appear clearly from the above discussion of the electric multisystem of the present invention.

The invention also relates to a rail vehicle comprising an electric multisystem according to the present invention.

Further advantages as well as advantageous features of the invention will appear from the description following below.

### BRIEF DESCRIPTION OF THE DRAWINGS

With reference to the appended drawings, below follows a specific description of embodiments of the invention cited as examples.

In the drawings:
- Fig. 1: is a very schematic view illustrating a known electric system shown for explaining the present invention,
- Fig. 2: is a very schematic view of a circuit diagram of an electric multisystem according to an embodiment of the invention, and
- Fig. 3: is a circuit diagram of a part of the electric system shown in Fig. 2.

### DETAILED DESCRIPTION OF EMBODIMENTS OF THE INVENTION

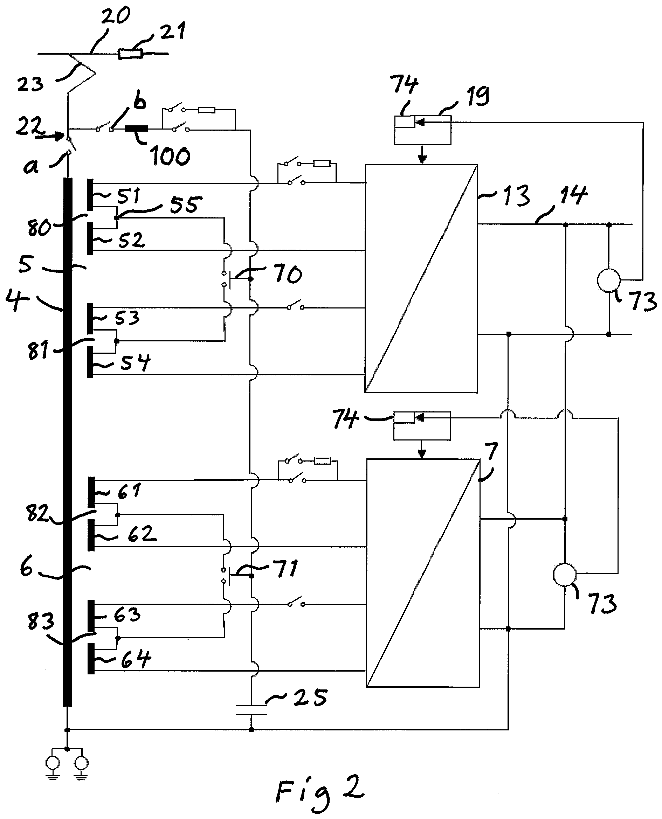

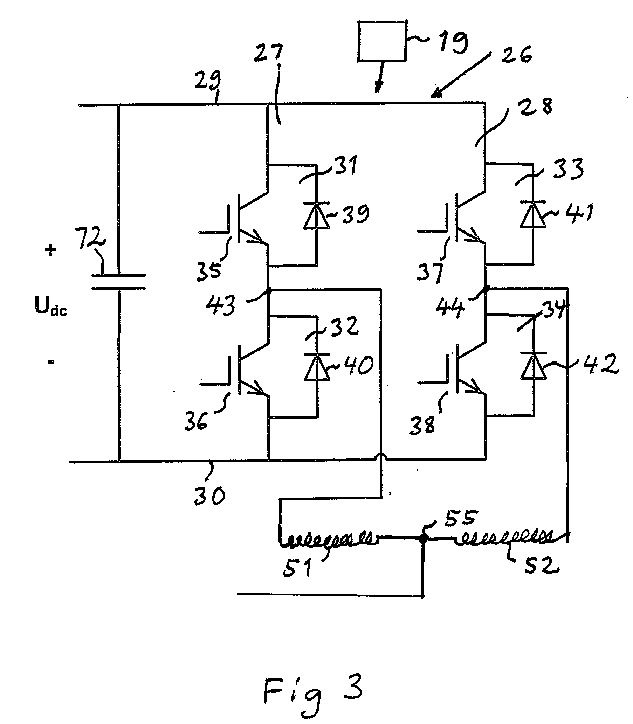

The invention specific features of an electric multisystem to be arranged on board a rail vehicle according to an embodiment of the invention will now be described while making reference to Figs. 2 and 3 besides Fig. 1. The members of the system shown in Fig. 1 are in Figs. 2 and 3 provided with the same reference numerals as in Fig. 1. Since the invention is mainly directed to the operation of the system when connected to a DC-contact line the description will hereinafter be focused on such operation of the system.

The DC-contact line 20 has a line inductance 21. Depending on EMC requirements a separate inductor may be needed to be added to the line inductance, and a line filter inductor 100 considering this is here indicated. It is schematically illustrated how a first connector means 22 in the form of a system changeover switch is configured to, one at a time, connect either a first connection point a of the electric system to an AC-contact line or a second connection point b of the electric system to a DC-contact line, in which for these connections to AC and DC supply the same pantograph 23 is used for both types of contact lines. It will in practice mostly be required to have two separate disconnect switches, one for AC and one for DC, for fulfilling the function here for simplicity summarised by said first connection means 22 because the voltages come from separate terminals. A charging circuit not shown is arranged to charge the capacitor 25 without tripping the feeding supply fuses also not shown. This capacitor 25 has its main function as a filter component. Each line converter 13, 7 has here two bridges 26 of the type shown in Fig. 3 connected in parallel to a respective DC intermediate link 14, 18. Each such bridge has two phase-legs 27, 28 connected in parallel between opposite poles 29, 30 of the DC intermediate link and each phase-leg has two current valves 31-34 connected in series. Each current valve has a semiconductor device 35-38 of turn off type, such as an IGBT, and a rectifying member 39-42, such as a rectifying diode, connected in anti-parallel therewith. Midpoints 43, 44 of the two phase legs are connected to different ends of a secondary winding 80 in common. It is schematically illustrated in Fig. 2 how the transformer 3 for each line converter has two secondary windings 80, 81 and 82, 83 to be connected to a bridge each of the respective line converter and that each such secondary winding is divided into two halves 51-54, 61-64.

It is shown in Fig. 3 how the DC voltage is connected to a midpoint 55 between the respective two secondary windings 51, 52. Second connector means for this are schematically illustrated in Fig. 2 at 70, 71. A control unit 19 configured to control the current valves shown in Fig. 3 of the line converter will do this by controlling the semiconductor devices 35-38 thereof, and this control unit is when the electric system is connected to a DC-contact line configured to control the line converter to together with the inductor of each secondary winding half 51, 52 used as a step-up chopper inductor act as a DC to DC-chopper for adjusting the level of the DC voltage delivered to the capacitor 72 of the DC intermediate link 14. It is indicated at 73 how the control unit 19 may receive information about the actual level of the DC intermediate link voltage delivered to the electric system for considering this level when controlling the bridges of the line converter 13 as a DC to a DC-chopper for obtaining the voltage level desired on the DC intermediate link 14. This means that if the motor converter 15 and the motors 17 are designed for a rated voltage of 1 800 VDC and the DC-contact line delivers a DC voltage to the electric system of only 500 - 900 VDC the control unit 19 may control the line converter 13 to step up the voltage to 1 800 VDC or a level close thereto.

By connecting the DC voltage to the midpoint 55 of the secondary winding the current valves of both phase legs 27, 28 may be controlled with interleaving to provide the DC intermediate link 14 with electric power and a ripple frequency being twice as high as would the DC voltage be connected to one side of the secondary winding and only one of the phase legs used as chopper, which results in a lower content of harmonics and also an electric power transferrable through the line converter being twice as high.

The invention is of course not in any way restricted to the embodiments described above, but many possibilities to modifications thereof would be apparent to a person with skill in the art without departing from the scope of the invention as defined in the appended claims.

The number of line converters of the electric system may be different than shown, such as 1 or 3. Each current valve may have a plurality of semiconductor devices connected in series to be controlled as one single switch. For just mention a couple of possible modifications.

It is pointed out that "connect" as used in this disclosure does not mean that a connection has to be made without any intermediate parts in the connection line between two parts connected to each other. Said second connector means will for instance in practice connect the midpoint of a secondary winding via one or more parts to the second connection point. But such parts have been omitted in the figures for the sake of simplicity. The same applies for example also to the connection of the charging circuit to the second connection point.

## Claims

1. An electric multisystem configured to be arranged on board a rail vehicle (1) and comprising
• a first connector means (22, 23) configured to one at a time connect either a first connection point (a) of the electric system to an AC-contact line (2) or a second connection point (b) of the electric system to a DC-contact line (20),
• a transformer (3) comprising a primary winding (4), to which the first connection point (a) is connected,
• a line converter (7, 13) to which a secondary winding (5, 6) of the transformer is connected and which has at least one bridge (26) with two phase-legs (27, 28) connected in parallel between opposite poles (29, 30) of a DC intermediate link (14, 18) and having each at least two current valves (31-34) connected in series, each said current valve comprising a semiconductor device (35-38) of turn-off type and a rectifying member (39-42) connected in anti-parallel therewith, a midpoint (43, 44) of each phase-leg dividing the phase-leg in two identical halves being connected to said secondary winding of the transformer, and
• a control unit (19) configured to control the current valves of the line converter (7, 13) by controlling said semiconductor devices thereof,
in which a second connector means (70, 71) is configured to connect said secondary winding (5, 6) of the transformer (3) to the second connection point (b)
**characterized in that** the secondary winding of the transformer is divided into two halves (51-54, 61-64) connected in series, that the second connector means is configured to connect said second connection point (b) to a midpoint (55) of the secondary winding of the transformer between said two halves (51, 52) thereof, and that the control unit (19) is, when the electric system is fed through a DC-contact line, configured to control the line converter (13, 7) to together with the inductor of each half of the secondary winding used as a step-up chopper inductor act as a DC to DC-chopper for adjusting the level of the DC voltage delivered to the DC intermediate link (14, 18).

2. An electric multisystem according to claim 1, **characterized in that** it comprises means (73) configured to determine the level of the voltage on the DC intermediate link when the second connector means connects the midpoint of the secondary winding of the transformer to the second connection point (b), that it comprises means (74) configured to compare the level of this DC intermediate link voltage with a predetermined level, and that the control unit (19) is configured to control the line converter to deliver a DC voltage on the DC intermediate link of a level approaching said predetermined level.

3. An electric multisystem according to claim 1 or 2, **characterized in that** the control unit (19) is configured to control the current valves of the at least two phase-legs (27, 28) of the line converter with the aim to cancel out harmonics.

4. An electric multisystem according to any of the preceding claims, **characterized in that** said line converter (7, 13) has two said bridges (26) connected in parallel to said DC intermediate link (14, 18), and that the transformer (3) comprises two said secondary windings (80-83) each divided into two halves and connected to a said bridge each of the line converter (7, 13).

5. An electric multisystem according to any of the preceding claims, **characterized in that** it comprises a motor converter (15) connected to the DC intermediate link (14) and controlled by a control unit (16) for delivering a three-phase alternating voltage on the output thereof to one or several motors (17) in the form of electric machines for driving the vehicle.

6. An electric multisystem according to any of the preceding claims, **characterized in that** it has two said line converters (7, 13) connected to a said DC intermediate link (14, 18) each.

7. An electric multisystem according to claim 6, **characterized in that** one (18) of the DC intermediate links is connected to an auxiliary converter (8) connected through a further transformer (10) to sockets of a distribution network in the rail vehicle, such as for connection of computers, and to lightening, heating, and other appliances.

8. A method for controlling an electric multisystem on board a rail vehicle (1), which system comprises:
• a first connector means (22, 23) configured to one at a time connect either a first connection point (a) of the electric system to an AC-contact line (2) or a second connection point (b) of the electric system to a DC-contact line (20),
• a transformer (3) comprising a primary winding (4), to which the first connection point (a) is connected, and
• a line converter (7, 13) to which a secondary winding (5, 6) of the transformer is connected and which has at least one bridge (26) with two phase-legs (27, 28) connected in parallel between opposite poles (29, 30) of a DC intermediate link (14, 18) and having each at least two current valves (31-34) connected in series, each said current valve comprising a semiconductor device (35-38) of turn-off type and a rectifying member (39-42) connected in anti-parallel therewith, a midpoint (43,44) of each phase-leg dividing the phase-leg in two identical halves being connected to said secondary winding of the transformer,
in which the method comprises the step
a) connecting a DC-contact line (20) for rail vehicles to the electric systems by connecting said secondary winding (5, 6) of the transformer to said second connection point (b),
**characterized in that** it is a said electric system having the secondary winding divided into two halves (51-54, 61-64) connected in series that is controlled, that in step a) said second connection point (b) is connected to a midpoint (55) of the secondary winding of the transformer between said two halves (51, 52) thereof, and that it comprises a further step b) carried out after step a) of controlling the line converter (7, 13) to together with the inductor of each half (51, 52) of the secondary winding used as a step-up chopper inductor act as a DC to DC-chopper for adjusting the level of the DC voltage delivered to the DC intermediate link (14, 18).

9. A method according to claim 8, **characterized in that** it comprises a step c), carried out before step b), of determining the level of the voltage on the DC intermediate link and a step d), carried out after step c) but before step b), of comparing the level of this DC voltage determined with a predetermined level, and that in step b) the line converter (7, 13) is controlled to deliver a DC voltage to the DC intermediate link (14, 18) of a level approaching said predetermined level, said steps c), d) and b) being cyclically repeated.

10. A rail vehicle comprising an electric multisystem according to any of claims 1-7.

## Patentansprüche

1. Ein elektrisches Multisystem, das konfiguriert ist, an Bord eines Schienenfahrzeugs (1) angeordnet zu sein, umfassend
- ein erstes Verbindungsmittel (22, 23), das konfiguriert ist zum gleichen Zeitpunkt entweder einen ersten Verbindungspunkt (a) des elektrischen Systems mit einer Wechselstromkontaktleitung (2) zu verbinden oder einen zweiten Verbindungspunkt (b) des elektrischen Systems mit einer Gleichstromkontaktleitung (20) zu verbinden,
- einen Transformator (3), der eine Primärwicklung (4) umfasst, mit der der erste Verbindungspunkt (a) verbunden ist,
- einen Netzstromrichter (7, 13), an den eine Sekundärwicklung (5, 6) des Transformators angeschlossen ist und der wenigstens eine Brücke (26) mit zwei Phasenschenkeln (27, 28) aufweist, die parallel zwischen entgegengesetzten Polen (29, 30) eines Gleichstromzwischenkreises (14, 18) geschaltet sind und jeweils wenigstens zwei in Reihe geschaltete Stromventile (31-34) aufweisen, wobei jedes Stromventil eine Halbleitervorrichtung (35-38) abschaltbarer Art aufweist und ein Gleichrichtungselement (39-42) aufweist, das antiparallel damit verbunden ist, wobei ein Mittelpunkt (43, 44) jedes Phasenschenkels den Phasenschenkel in zwei identische Hälften unterteilt, die mit der Sekundärwicklung des Transformators verbunden sind, und
- eine Steuereinheit (19), die konfiguriert ist, die Stromventile des Netzstromrichters (7, 13) durch Steuern von deren Halbleitervorrichtungen zu steuern,
wobei eine zweite Verbindungseinrichtung (70, 71) konfiguriert ist, die Sekundärwicklung (5, 6) des Transformators (3) mit dem zweiten Verbindungspunkt (b) zu verbinden,
**dadurch gekennzeichnet, dass** die Sekundärwicklung des Transformators in zwei in Reihe geschaltete Hälften (51 - 54, 61 - 64) aufgeteilt ist, dass das zweite Verbindungsmittel konfiguriert ist, den zweiten Verbindungspunkt (b) mit einem Mittelpunkt (55) der Sekundärwicklung des Transformators zwischen deren beiden Hälften (51, 52) zu verbinden, und dass die Steuereinheit (19) konfiguriert ist, wenn das elektrische System durch eine Gleichstromkontaktleitung gespeist wird, den Netzstromrichter (13, 7) so zu steuern, dass er zusammen mit der Induktivität jeder Hälfte der Sekundärwicklung, die als Hochsetzsteller-Induktivität verwendet wird, als ein Gleichstrom-zu-Gleichstrom-Steller wirkt, um das Niveau der Gleichspannung einzustellen, die zum Gleichstromzwischenkreis (14, 18) geliefert wird.

2. Ein elektrisches Multisystem nach Anspruch 1, **dadurch gekennzeichnet, dass** es Mittel (73) umfasst, die konfiguriert sind, das Niveau der Spannung an dem Gleichspannungszwischenkreis zu bestimmen, wenn das zweite Verbindungsmittel den Mittelpunkt der Sekundärwicklung des Transformators mit dem zweiten Verbindungspunkt (b) verbindet, dass es Mittel (74) umfasst, die konfiguriert sind, das Niveau dieser Gleichstromzwischenkreisspannung mit einem vorgegebenen Niveau zu vergleichen, und dass die Steuereinheit (19) konfiguriert ist, den Netzstromrichter zu steuern, um eine Gleichspannung in dem Gleichstromzwischenkreis auf einem Niveau zu liefern, das sich dem vorbestimmten Niveau nähert.

3. Ein elektrisches Multisystem nach Anspruch 1 oder 2, **dadurch gekennzeichnet, dass** die Steuereinheit (19) konfiguriert ist, die Stromventile der wenigstens zwei Phasenschenkel (27, 28) des Netzstromrichters mit dem Ziel zu steuern, Oberwellen auszugleichen.

4. Ein elektrisches Multisystem nach einem der vorhergehenden Ansprüche, **dadurch gekennzeichnet, dass** der Netzstromrichter (7, 13) zwei dieser Brücken (26) aufweist, die parallel geschaltet mit dem Gleichstromzwischenkreis (14, 18) verbunden sind, und dass der Transformator (3) zwei Sekundärwicklungen (80 - 83) umfasst, die jeweils in zwei Hälften unterteilt sind und jeweils mit einer der Brücken des Netzstromrichters (7, 13) verbunden sind.

5. Ein elektrisches Multisystem nach einem der vorhergehenden Ansprüche, **dadurch gekennzeichnet, dass** es einen Motorstromrichter (15) umfasst, der mit dem Gleichstromzwischenkreis (14) verbunden ist und von einer Steuereinheit (16) gesteuert wird, um an seinem Ausgang eine dreiphasige Wechselspannung an einen oder mehrere Motoren (17) in Form von elektrischen Maschinen zum Antreiben des Fahrzeugs zu liefern.

6. Ein elektrisches Multisystem nach einem der vorhergehenden Ansprüche, **dadurch gekennzeichnet, dass** es zwei dieser Netzstromrichter (7, 13) aufweist, die jeweils mit einem Gleichstromzwischenkreis (14, 18) verbunden sind.

7. Ein elektrisches Multisystem nach Anspruch 6, **dadurch gekennzeichnet, dass** einer (18) der Gleichstromzwischenkreise mit einem Hilfsumrichter (8) verbunden ist, der über einen weiteren Transformator (10) mit Anschlüssen eines Verteilernetzes im Schienenfahrzeug verbunden ist, beispielsweise für den Anschluss von Computern und von Beleuchtungs-, Heizungs- und anderen Einrichtungen.

8. Ein Verfahren zum Steuern eines elektrischen Multisystems an Bord eines Schienenfahrzeugs (1), wobei das System umfasst:
- ein erstes Verbindungsmittel (22, 23), das konfiguriert ist, zum gleichen Zeitpunkt entweder einen ersten Verbindungspunkt (a) des elektrischen Systems mit einem Wechselstromkontaktleitung (2) zu verbinden oder einen zweiten Verbindungspunkt (b) des elektrischen Systems mit einer Gleichstromkontaktleitung (20) zu verbinden,
- einen Transformator (3) mit einer Primärwicklung (4), mit der der erste Verbindungspunkt (a) verbunden ist, und
- einen Netzstromrichter (7, 13), an den eine Sekundärwicklung (5, 6) des Transformators angeschlossen ist und der wenigstens eine Brücke (26) mit zwei Phasenschenkeln (27, 28) aufweist, die parallel zwischen entgegengesetzten Polen (29, 30) eines Gleichstromzwischenkreises (14, 18) geschaltet sind und jeweils wenigstens zwei in Reihe geschaltete Stromventile (31-34) aufweisen, wobei jedes Stromventil eine Halbleitervorrichtung (35-38) abschaltbarer Art aufweist und ein Gleichrichtungselement (39-42) aufweist, das antiparallel damit verbunden ist, wobei ein Mittelpunkt (43, 44) jedes Phasenschenkels den Phasenschenkel in zwei identische Hälften unterteilt, die mit der Sekundärwicklung des Transformators verbunden sind,
wobei das Verfahren den Schritt umfasst:
a) Verbinden einer Gleichstromkontaktleitung (20) für Schienenfahrzeuge zu den elektrischen Systemen durch Verbinden der Sekundärwicklung (5, 6) des Transformators mit dem zweiten Verbindungspunkt (b),
**dadurch gekennzeichnet, dass** das elektrische System, dessen Sekundärwindung in zwei in Reihe geschaltete Hälften (51 - 54), 61 - 64) unterteilt ist, gesteuert wird, dass in Schritt a) der zweite Verbindungspunkt (b) mit einem Mittelpunkt (55) der Sekundärwicklung des Transformators zwischen deren beiden Hälften (51, 52) verbunden wird, und dass es einen nach dem Schritt a) durchgeführten weiteren Schritt b) eines Steuerns des Netzstromrichters (7, 13) umfasst, um zusammen mit der Induktivität jeder Hälfte (51, 52) der Sekundärwindung, die als verwendet Hochsetzsteller-Induktivität verwendet wird, als ein Gleichstrom-zu-Gleichstrom-Steller zu wirken, um das Niveau der Gleichspannung einzustellen, die zum Gleichstromzwischenkreis (14, 18) geliefert wird.

9. Verfahren nach Anspruch 8, **dadurch gekennzeichnet, dass** es einen vor dem Schritt b) ausgeführten Schritt c) umfasst, in dem das Niveau der Spannung in dem Gleichstromzwischenkreis bestimmt wird, und einen Schritt d) umfasst, der nach dem Schritt c) aber vor dem Schritt b) ausgeführt wird, wobei in dem Schritt d) das Niveau der bestimmten Gleichspannung mit einem vorbestimmten Niveau verglichen wird, und dass in dem Schritt b) der Netzstromrichter (7, 13) gesteuert wird, um eine Gleichspannung mit einem Niveau an den Gleichstromzwischenkreis zu liefern, das sich dem vorbestimmten Niveau nähert, wobei die Schritte c), d) und b) zyklisch wiederholt werden.

10. Schienenfahrzeug umfassend ein elektrisches Multisystem nach einem der Ansprüche 1 - 7.

## Revendications

1. Multisystème électrique, configuré pour être agencé à bord d'un véhicule ferroviaire (1) et comprenant
• un premier moyen connecteur (22, 23) configuré pour, un à la fois, connecter soit un premier point de connexion (a) du système électrique à une ligne de contact CA (2) soit un second point de connexion (b) du système électrique à une ligne de contact CC (20),
• un transformateur (3) comprenant un enroulement primaire (4), auquel le premier point de connexion (a) est connecté,
• un convertisseur de ligne (7, 13) auquel un enroulement secondaire (5, 6) du transformateur est connecté et qui a au moins un pont (26) avec deux branches de phase (27, 28) connectées en parallèle entre des pôles opposés (29, 30) d'une liaison intermédiaire CC (14, 18) et ayant chacun au moins deux valves de courant (31-34) connectées en série, chaque dite valve de courant comprenant un dispositif semi-conducteur (35-38) de type arrêt et un élément redresseur (39-42) connecté en anti-parallèle avec celui-ci, un point médian (43, 44) de chaque branche de phase divisant la branche de phase en deux moitiés identiques étant connecté audit enroulement secondaire du transformateur, et
• une unité de commande (19) configurée pour commander les valves de courant du convertisseur de ligne (7, 13) en commandant lesdits dispositifs semiconducteurs de celles-ci,
dans lequel un second moyen connecteur (70, 71) est configuré pour connecter ledit enroulement secondaire (5, 6) du transformateur (3) au second point de connexion (b)
**caractérisé en ce que** l'enroulement secondaire du transformateur est divisé en deux moitiés (51-54, 61-64) connectées en série, que le second moyen connecteur est configuré pour connecter ledit second point de connexion (b) à un point médian (55) de l'enroulement secondaire du transformateur entre lesdites deux moitiés (51, 52) de celui-ci, et que l'unité de commande (19) est, lorsque le système électrique est alimenté par l'intermédiaire d'une ligne de contact CC, configurée pour commander le convertisseur de ligne (13, 7) pour, conjointement avec l'inducteur de chaque moitié de l'enroulement secondaire utilisé en tant qu'inducteur hacheur élévateur, servir de hacheur CC-CC pour ajuster le niveau de la tension CC fournie à la liaison intermédiaire CC (14, 18).

2. Multisystème électrique selon la revendication 1, **caractérisé en ce qu'**il comprend des moyens (73) configurés pour déterminer le niveau de la tension sur la liaison intermédiaire CC lorsque le second moyen connecteur connecte le point médian de l'enroulement secondaire du transformateur au second point de connexion (b), qu'il comprend des moyens (74) configurés pour comparer le niveau de cette tension CC de liaison intermédiaire à un niveau prédéterminé, et que l'unité de commande (19) est configurée pour commander au convertisseur de ligne de fournir une tension CC sur la liaison intermédiaire CC d'un niveau se rapprochant dudit niveau prédéterminé.

3. Multisystème électrique selon la revendication 1 ou 2, **caractérisé en ce que** l'unité de commande (19) est configurée pour commander les valves de courant des au moins deux branches de phase (27, 28) du convertisseur de ligne dans le but d'annuler des harmoniques.

4. Multisystème électrique selon l'une quelconque des revendications précédentes, **caractérisé en ce que** ledit convertisseur de ligne (7, 13) a deux dits ponts (26) connectés en parallèle à ladite liaison intermédiaire CC (14, 18), et que le transformateur (3) comprend deux dits enroulements secondaires (80-83) chacun divisé en deux moitiés et connecté chacun à un dit pont du convertisseur de ligne (7, 13).

5. Multisystème électrique selon l'une quelconque des revendications précédentes, **caractérisé en ce qu'**il comprend un convertisseur de moteur (15) connecté à la liaison intermédiaire CC (14) et commandé par une unité de commande (16) pour fournir une tension alternative triphasée sur la sortie de celui-ci à un ou plusieurs moteurs (17) sous forme de machines électriques pour entraîner le véhicule.

6. Multisystème électrique selon l'une quelconque des revendications précédentes, **caractérisé en ce qu'**il a deux dits convertisseurs de ligne (7, 13), chacun connecté à une dite liaison intermédiaire CC (14, 18).

7. Multisystème électrique selon la revendication 6, **caractérisé en ce qu'**une (18) des liaisons intermédiaires CC est connectée à un convertisseur auxiliaire (8) connecté par l'intermédiaire d'un transformateur supplémentaire (10) à des prises d'un réseau de distribution dans le véhicule ferroviaire, telles que pour la connexion d'ordinateurs, et à un éclairage, chauffage, et d'autres équipements.

8. Procédé pour commander un multisystème électrique à bord d'un véhicule ferroviaire (1), lequel système comprend :
• un premier moyen connecteur (22, 23) configuré pour, un à la fois, connecter soit un premier point de connexion (a) du système électrique à une ligne de contact CA (2) soit un second point de connexion (b) du système électrique à une ligne de contact CC (20),
• un transformateur (3) comprenant un enroulement primaire (4), auquel le premier point de connexion (a) est connecté, et
• un convertisseur de ligne (7, 13) auquel un enroulement secondaire (5, 6) du transformateur est connecté et qui a au moins un pont (26) avec deux branches de phase (27, 28) connectées en parallèle entre des pôles opposés (29, 30) d'une liaison intermédiaire CC (14, 18) et ayant chacun au moins deux valves de courant (31-34) connectées en série, chaque dite valve de courant comprenant un dispositif semi-conducteur (35-38) de type arrêt et un élément redresseur (39-42) connecté en anti-parallèle avec celui-ci, un point médian (43, 44) de chaque branche de phase divisant la branche de phase en deux moitiés identiques étant connecté audit enroulement secondaire du transformateur,
dans lequel le procédé comprend l'étape
a) de connexion d'une ligne de contact CC (20) pour des véhicules ferroviaires aux systèmes électriques en connectant ledit enroulement secondaire (5, 6) du transformateur audit second point de connexion (b),
**caractérisé en ce qu'**il s'agit d'un dit système électrique ayant l'enroulement secondaire divisé en deux moitiés (51-54, 61-64) connectées en série qui est commandé, que, dans l'étape a) ledit second point de connexion (b) est connecté à un point médian (55) de l'enroulement secondaire du transformateur entre lesdites deux moitiés (51, 52) de celui-ci, et qu'il comprend une étape supplémentaire b), réalisée après l'étape a), de commande du convertisseur de ligne (7, 13) pour, conjointement avec l'inducteur de chaque moitié (51, 52) de l'enroulement secondaire utilisé en tant qu'inducteur hacheur élévateur, servir de hacheur CC-CC pour ajuster le niveau de la tension CC fournie à la liaison intermédiaire CC (14, 18).

9. Procédé selon la revendication 8, **caractérisé en ce qu'**il comprend une étape c), réalisée avant l'étape b), de détermination du niveau de la tension sur la liaison intermédiaire CC et une étape d), réalisée après l'étape c) mais avant l'étape b), de comparaison du niveau de cette tension CC déterminée à un niveau prédéterminé, et que, dans l'étape b), le convertisseur de ligne (7, 13) est commandé pour fournir une tension CC à la liaison intermédiaire CC (14, 18) d'un niveau se rapprochant dudit niveau prédéterminé, lesdites étapes c), d) et b) étant répétées de façon cyclique.

10. Véhicule ferroviaire, comprenant un multisystème électrique selon l'une quelconque des revendications 1 à 7.
